# EUROPEAN PATENT SPECIFICATION

(11) **EP 4 524 810 B1**
(45) Date of publication and mention of the grant of the patent: **15.07.2026**
(21) Application number: 25155125.5
(22) Date of filing: 08.11.2013
(51) Int. Cl.: G06K 7/14, G06K 7/10, G06K 7/00

(54) **MOBILE COMPUTER CONFIGURED TO READ MULTIPLE DECODABLE INDICIA**
MOBILER COMPUTER MIT KONFIGURATION ZUM LESEN MEHRERER DECODIERBARER INDIZIEN
ORDINATEUR MOBILE CONFIGURÉ POUR LIRE DE MULTIPLES INDICES POUVANT ÊTRE DÉCODÉS

(30) Priority: 15.11.2012 US 201261726747 P; 14.12.2012 US 201261737552 P; 17.01.2013 US 201313743477; 24.01.2013 US 201313748926
(43) Date of publication of application: 19.03.2025
(62) Divisional of application: 24156878.1
(73) Proprietor: Hand Held Products, Inc., Charlotte, NC 28202 (US)
(72) Inventor: TODESCHINI, Erik, Charlotte 28202 (US); HUSSEY, Robert Michael, Charlotte 28202 (US); SMITH, Taylor, Charlotte 28202 (US)
(74) Representative: Haseltine Lake Kempner LLP

(56) References cited:
- US-A- 5 821 523
- US-A- 5 902 988
- US-A1- 2011 156 869

## Description

### CROSS REFERENCE TO RELATED APPLICATIONS

This application claims priority to U.S. Patent Application Ser. No. 13/748,926, filed January 24, 2013, and related U. S. Provisional Application No. 61/726,747, filed November 15, 2012, each of which is entitled, "Mobile Computer Configured to Read Multiple Decodable Indicia." This application further claims priority to U.S. Patent Application Ser. No. 13/743,477, filed January 17, 2013, and related U.S. Provisional Application No. 61/737,552, filed December 14, 2012, each of which is entitled "Selective Output of Decoded Message Data."

### FIELD OF THE INVENTION

The present invention relates generally to digital devices, and in particular to mobile computers configured to read decodable indicia. The present invention relates in general to optical systems and specifically to optical systems having selective output of decoded message data.

### BACKGROUND OF THE INVENTION

Decodable indicia are patterns, marks, or messages which are designed to be scanned and interpreted by computer and/or other mechanical and/or automated methods. Many known types of decodable indicia fall under the category of barcodes. Barcodes are graphical representations of data, the most common of which are referred to as one dimensional (1D) and two dimensional (2D) barcodes. 1D barcodes are graphical entities that represent data by varying the widths and spacing of parallel lines. 2D barcodes are also graphical entities that represent data, but in addition to the parallel lines, or bars, a 2D barcode may contain rectangles, dots, hexagons and other geometric patterns in two dimensions. The data encoded in the barcodes are interpreted by optical scanners and/or software. Barcodes can be scanned by special optical scanners called barcode readers as well as by general purpose devices such as smart phones. Other types of decodable indicia include optical character recognition (OCR), glyphs, or other visual markings. Also, non-visual technologies such as magnetic strips, radio-frequency identification (RFID), and other non-visual technologies fall under the definition of decodable indicia as well.

The discussion above is merely provided for general background information and is not intended to be used as an aid in determining the scope of the claimed subject matter.

Image sensor integrated circuits having multiple pixel image sensor arrays are commercially available. Imaging apparatus having image sensor arrays are available in a variety of forms, including digital cameras, mobile phones, surveillance equipment, medical diagnostic equipment, and indicia decoding apparatus. Imaging apparatuses are available in forms with indicia decoding capability and without decoding capability. Imaging apparatus with permanent or selectively activated indicia decoding capability can be regarded as indicia reading apparatus.

Indicia reading apparatus for reading decodable indicia are available in multiple varieties. For example, minimally featured indicia reading apparatus devoid of a keyboard and display are common in point of sale applications. Indicia reading apparatus devoid of a keyboard and display are available in the recognizable gun style form factor having a handle and trigger button (trigger) that can be actuated by an index finger. Indicia reading apparatus having keyboards and displays are also available, often in a form where a keyboard and display is commonly located by the providing of a touch screen type display, *e.g.,* as in a mobile phone. Keyboard and display equipped indicia reading apparatus are commonly used in retail, shipping and warehouse applications. In a keyboard and display equipped indicia reading apparatus, a trigger button for actuating the output of decoded messages is typically provided in such locations as to enable actuation by a thumb of an operator. Indicia reading apparatus in a form devoid of a keyboard and display or in a keyboard and display equipped form are commonly used in a variety of data collection applications including retail point of sale applications, retail inventory applications, shipping applications, warehousing applications, security check point applications, patient care applications, and personal use, common where keyboard and display equipped indicia reading apparatus is provided by a personal mobile telephone having indicia reading functionality. Fixed mount indicia reading apparatus are also commonly available, *e.g.,* installed under or near a countertop at a point of sale. Some indicia reading apparatus are adapted to read bar code symbols including one or more of one dimensional (1D) bar codes, stacked 1D bar codes, and two dimensional (2D) bar codes. Other indicia reading apparatus are adapted to read OCR characters while still other indicia reading apparatus are equipped to read both bar code symbols and OCR characters. US 2011/156869 A1 discloses an image capture system having an image capture module and a terminal unit capturing both photo images and coded images. An alterable optical path of the system operates in a first configuration when capturing coded images and in a second configuration when capturing photo images. Captured images are presented on a display as they are captured.

### SUMMARY OF THE INVENTION

Systems are disclosed that in various embodiments include devices, methods, and/or software for processing multiple decodable indicia. In accordance with the present invention there is provided an indicia-reading device, a corresponding processing method, a computer program and a storage medium as defined in claims 1, 12-14. Preferred embodiments are defined in dependent claims 2-11.

An imaging apparatus can be operative to capture a frame of image data representing a scene having one or more decodable indicia and display image data corresponding to the one or more decodable indicia. The imaging apparatus can be operative so that responsively to a user input control decoded message data of a selected decodable indicia is selectively output. One or more processor executable program can be provided for facilitating selective output of decoded message data.

### BRIEF DESCRIPTION OF THE DRAWINGS

The features described herein can be better understood with reference to the drawings described below. The drawings are not necessarily to scale, emphasis instead generally being placed upon illustrating the principles of the invention. It should be understood that the present invention is not limited to the precise arrangements and instrumentalities shown in the drawings.
FIGS. 1a-1b schematically illustrate one embodiment of a mobile computer described herein;
FIG. 2 depicts a component-level diagram of an illustrative embodiment of the mobile computer described herein;
FIG. 3 schematically illustrates a network diagram of one illustrative embodiment of a data collection system employing the mobile computer disclosed herein; and
FIG. 4 schematically illustrates one embodiment of a method of processing multiple decodable indicia by mobile computer disclosed herein.
FIG. 5 is a perspective physical form view (with supplemental side view) of an imaging apparatus displaying representations of a plurality of bar codes;
FIG. 6 is a block diagram of an imaging apparatus;
FIG. 7 is a computer readable storage medium storing one or more program;
FIG. 8 is a flow diagram illustrating functions of one or more program that can be stored on a computer readable medium;
FIGS. 9-11 are examples of screen shots (*e.g*., which can be displayed by a display of portable hand held or wearable imaging apparatus) displaying image data corresponding to decodable indicia.

### DETAILED DESCRIPTION

Capturing decodable indicia can be performed using various technologies. Laser scanning or linear imaging can be used for capturing 1D barcodes. Some 2D barcodes known as stacked codes, such as PDF417, can be read using these technologies as well, however 2D bar codes known as matrix codes require devices which can capture a 2 dimensional (2D) image of the bar code. These 2D images are also useful for decoding 1D, 2D stacked codes, as well as OCR or other visual decodable indicia. For RFID tags, magnetic strips or other non-visual decodable indicia, the technologies may involve use of RF, magnetic reading heads, or other non-visual means of capture. For the purposes of this disclosure, capturing any decodable indicia will be referred to generally as "imaging," and the captured representation of the decodable indicia by a device will be referred to as an "image."

Mobile computers, such as smart phones, tablet personal computers (PCs), personal digital assistants (PDA), and other similar devices equipped with imaging devices can be used for reading and/or decoding decodable indicia. "Computer" herein shall refer to a programmable device for data processing and control, including a central processing unit (CPU), a memory, and at least one communication interface.

In situations when two or more decodable indicia are present within a captured image, an additional processing might be needed to determine which indicia and in which order need to be decoded and/or used for a particular application (*e.g.*, for information retrieval from an external computer).

In some embodiments, a mobile computer can, upon locating and decoding two or more decodable indicia within a captured image, display the image and visually mark the decoded indicia within the image (*e.g.,* by highlighting the successfully decoded decodable indicia, drawing a bounding box around the successfully decoded decodable indicia, placing a circular dot or some other visual marker in or around the center of the successfully decoded decodable indicia, *etc.*)*.* The mobile computer can accept user input indicating which indicia and in which order need to be used by one or more applications. In one illustrative embodiment, responsive to accepting user input selecting one or more decodable indicia, the mobile computer can transmit to an external computer the decoded messages corresponding to the selected indicia. In another illustrative embodiment, responsive to accepting user input selecting two or more decodable indicia, the mobile computer can transmit to an external computer, in the order indicated by the user, the decoded messages corresponding to the selected indicia.

In a further aspect, selecting one or more decodable indicia can be performed via touch screen by the user's tapping the screen areas containing the images of one or more decodable indicia. In one illustrative embodiment, the user's repetitive tapping the screen area containing a decodable indicia image can toggle on or off the inclusion of the indicia and/or a decoded message corresponding to the indicia into the sequence of messages to be transmitted to an external computer.

As noted herein *supra,* the mobile computer can, upon locating and decoding two or more decodable indicia within a captured image, display the image and visually mark the decoded indicia within the image (*e.g.,* by highlighting the successfully decoded decodable indicia, drawing a bounding box around the successfully decoded decodable indicia, placing a circular dot or some other visual marker in or around the center of the successfully decoded decodable indicia, *etc.*). The mobile computer can accept user input selecting within the displayed image at least one decodable indicia which is not marked as successfully decoded, and decode the selected decodable indicia.

In some embodiments, a mobile computer can schematically display one or more successfully decoded non-visual decodable indicia (*e.g.*, overlaid over an image acquired by the mobile computer's imaging device) and accept user input indicating which non-visual decodable indicia and in which order need to be decoded and/or used for a particular application (*e.g.,* for information retrieval from an external computer).

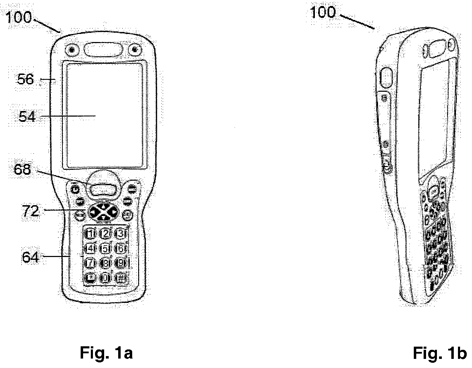

One illustrative embodiment of a mobile computer described herein is shown in FIG. 1a (front panel view) and FIG.1b (side panel view). The mobile computer 100 can comprise a housing 52 within which other components of mobile computer 100 can be disposed. A display 54 can be disposed on the front panel 56. Also disposed on the front panel 56 can be a keyboard 64 including functional keys 68, navigation keys 72, and/or numeric keys. At least one connector of a wired communication interface can be disposed on the bottom panel or side panel of the housing 52 (*e.g.,* a USB, PCMCIA, Ethernet, or MiniUSB connector). A skilled artisan would appreciate the fact that other form factors of mobile computer 100 are within the scope of this disclosure.

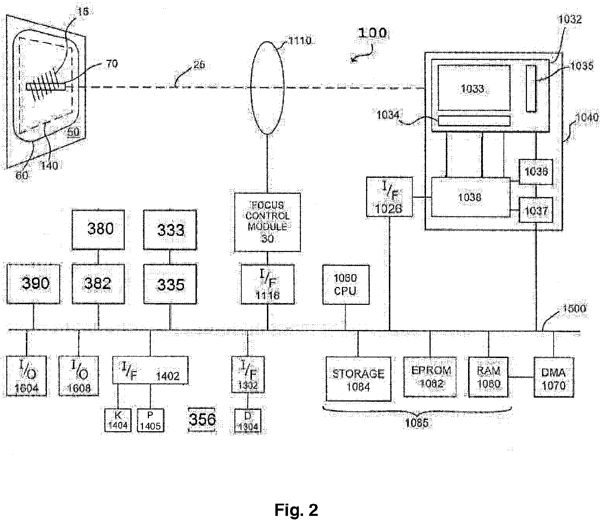

Component-level diagram of an illustrative embodiment of the mobile computer is now being described with references to FIG. 2. Mobile computer 100 can include one or more processors 1060 communicatively coupled to system bus 1500. For example, one or more processors 1060 may illustratively be or include a central processing unit (CPU), a complex programmable logic device (CPLD), an application-specific integrated circuit (ASIC), a field programmable gate array (FPGA), or any type of circuit capable of processing logic operations, in accordance with various embodiments.

Also coupled to system bus 1500 can be various interface circuits for coupling the peripheral devices, including, *e.g*., interface circuit 1302 for coupling display 1304, and interface circuit 1402 for coupling keyboard 1404 and pointing device 1405 to system bus 1500. In some embodiments, the pointing device can be provided by a touch screen overlay associated with the display 1304.

The mobile computer 100 can further comprise one or more communication interfaces 1604, 1608 for providing communications with external devices. Communication interfaces 1604, 1608 can include one or more wired interfaces (*e.g.*, Ethernet (IEEE 802.3), USB, RS/485, *etc.*) and one or more wireless interfaces (*e.g.,* interfaces configured to support at least one protocol of the IEEE 802.11/802.15/802.16 protocol family, at least one protocol of the HSPA/GSM/GPRS/EDGE protocol family, TDMA protocol, UMTS protocol, LTE protocol, and/or at least one protocol of the CDMA/1xEV-DO protocol family).

Also coupled to system bus 1500 can be memory 1085 provided by random access memory (RAM) 1080. In some embodiments, memory 1085 can further comprise a nonvolatile memory such as EPROM 1082, and/or a storage memory device 1084. In one embodiment, storage memory device 1084 can be provided by a magnetic disk storage device. Alternatively, storage memory device 1084 can be provided by a semiconductor storage device such as ROM, EPROM, flash memory, and/or any other computer-readable tangible storage device that can store computer programs and digital information.

In some embodiments, mobile computer 100 can further include a direct memory access unit (DMA) 1070 providing direct communications of one or more devices communicatively coupled to system bus 1500 with RAM 1080. Alternatively, mobile computer 100 can employ a system bus providing for bus arbitration mechanism (*e.g.*, a PCI bus) thus eliminating the need for a central DMA controller. Other embodiments of the system bus architecture and/or direct memory access components providing for efficient data transfer between one or more devices communicatively coupled to system bus 1500 and RAM 1080 can be provided.

In a further aspect, mobile computer 100 can include a built-in imaging device 1040 configured to acquire two-dimensional monochrome and/or color images. Imaging device 1040 can comprise an image sensor 1032 including a multiple pixel image sensor 1033 array having pixels arranged in rows and columns, associated column circuitry 1034, and row circuitry 1035. In one embodiment, the image sensor 1033 can be provided by a charge-coupled device (CCD) image sensor. In another embodiment, the image sensor can be provided by a complementary metal-oxide semiconductor (CMOS) image sensor. A skilled artisan would appreciate the fact that other types of image sensors are within the scope of the invention. Associated with the image sensor 1032 can be amplifier circuitry 1036, and an A/D converter 1037 which converts image information in the form of analog signals read out of image sensor 1033 into image information in the form of digital signals. In one embodiment, the A/D converter 1037 can be provided by an A/D array.

Image sensor 1032 can also have an associated timing and control circuit 1038 for use in controlling *e.g.*, the exposure period of image sensor 1032, gain applied to the amplifier circuitry 1036. As noted herein *supra,* the circuit components 1032, 1036, 1037, and 1038 can be packaged into a common imaging device 1040.

Mobile computer 100 can include interface circuit 1026 for coupling image sensor timing and control circuit 1038 to system bus 1500. Mobile computer 100 can be configured to read out analog signals representative of light incident on one or more pixels. The read out analog signals can be amplified by the analog signal amplifier 1036. The analog signals can then be fed to the input of the ADC 1037. The resulting digital values representative of the analog signals can be stored in a system memory such as RAM 1080. Image frame data stored in RAM 1080 can be in the form of multibit pixel values, with each multibit pixel value representing light incident on a pixel of image sensor 1033. DMA unit 1070 can route image information read out from image sensor 1032 to RAM 1080. In another aspect, processor 1060 can be programmed to read out image data stored in memory 1080 and subject such image data to various image processing algorithms.

In some embodiments, the mobile computer 100 can include a variable focus imaging lens 1110 for use in focusing an image of a decodable indicia located within a field of view 140 on a substrate 50 onto image sensor 1033. Imaging light rays can be transmitted about imaging axis 25. Variable focus imaging lens 1110 can be adapted to be capable of multiple best focus distances and multiple focal lengths. Variable focus imaging lens 1110 can be operative to provide a new best focus distance and/or focal length within a fraction of a frame time in response to an applied input control signal being applied to the variable focus imaging lens 1110. In one embodiment, the variable focus imaging lens 1110 can be provided by a deformable imaging lens, *e.g.,* a deformable fluid lens or gel lens. In another embodiment, the variable focus imaging lens 1110 can be provided by a non-deformable fluid lens, *e.g.,* an electrowetting liquid lens wherein the surface tension of one or more volumes of lens liquid changes in response to a signal being applied to the lens, or a liquid crystal type lens wherein indices of refraction of one or more volumes of lens fluid change in response to a signal being applied to the lens.

Mobile computer 100 can further comprise a battery 356. Mobile computer 100 can further comprise a GPS receiver 380 communicatively coupled to system bus 1500 via interface 382. The mobile computer 100 can further comprise at least one connector 390 configured to receive a subscriber identity module (SIM) card, also communicatively coupled to system bus 1500. A skilled artisan would appreciate the fact that mobile computer 100 can comprise various other components, circuits and interfaces.

In some embodiments, the mobile computer 100 can further comprise an embedded encoded information reading (EIR) device 333 communicatively coupled to system bus 1500 via interface 335. EIR device 333 can be provided, for example, by a laser scanning device, an RFID reading device, an NFC reading device, or a magnetic card reading device. The EIR device can be configured to output raw message data containing an encoded message and/or output decoded message data corresponding to the encoded message. As used herein, "message" is intended to denote a byte sequence or a character string comprising alphanumeric and/or non-alphanumeric characters. An encoded message can be used to convey information, such as identification of the source and the model of an item, for example, in an EPC code.

In one illustrative embodiment, the RFID reading device can be compliant with EPC™ Class-1 Generation-2 UHF RFID Protocol for Communications at 860 MHz - 960 MHz by EPCglobal*,* commonly known as the "Gen 2" standard, which defines physical and logical requirements for a passive-backscatter, Interrogator-talks-first (ITF) RFID system operating in the 860 MHz - 960 MHz frequency range.

In one illustrative embodiment, the NFC reading device of the EIR terminal can be compliant with NFC Digital Protocol Technical Specification DIGITAL 1.0 NFCForum-TS-DigitalProtocol-1.0 of 2010-11-17 by NFC Forum™.

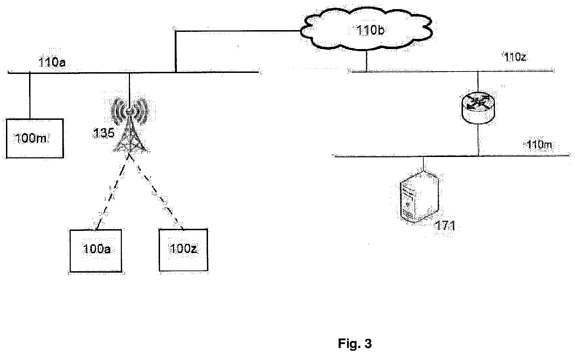

As noted herein *supra,* mobile computer 100 can transmit, via a wired or wireless communication interface and one or more communication networks, one or more decodable indicia images and/or one or more messages corresponding to successfully decoded decodable indicia to an external computer. As schematically illustrated by FIG. 3, mobile computer 100a-100z can access the external computer 171 over one or more local and/or wide area networks 110a-110z. Mobile computer 100a-100z can connect to one or more networks 110a-110z, *e.g.,* via a wireless access point 135. In one embodiment, at least one of networks 110a-110z can be provided by an IEEE 802.11x-compliant wireless network. In another embodiment, at least one of networks 110a-110z can be provided by an Ethernet network. In another embodiment, at least one of networks 110a-110z can be provided by a local area network (LAN). In another embodiment, at least one of networks 110a-110z can be provided by a wide area network (WAN). While different networks are designated herein, it is recognized that a single network as seen from the network layer of the OSI model can comprise a plurality of lower layer networks, *i.e.,* what can be regarded as a single Internet Protocol (IP) network, can include a plurality of different physical networks.

In a further aspect, the communications between mobile computer 100 and external computer 171 can comprise a series of requests and responses transmitted over one or more TCP connections, although a person skilled in the art would appreciate the fact that using other transport and application level protocols is within the scope of this disclosure. In some embodiments, at least one data frame transmitted by mobile computer 100 to external computer 171 can comprise one or more images of decodable indicia and/or one or more messages corresponding to decodable indicia successfully decoded by mobile computer 100. Responsive to receiving a decodable indicia image or a decoded message from mobile computer 100, external computer 171 can, in some embodiments, retrieve information corresponding to the decoded message from a database and transmit at least part of the retrieved information to mobile computer 100. In one illustrative embodiment, the decoded message can comprise a retail item identifier, and the information retrieved from the database and transmitted to the mobile computer 100 can comprise the retail item price and/or other characteristics. In another illustrative embodiment, the decoded message can comprise a medical patient identifier, and the information retrieved from the database and transmitted to the mobile computer 100 can comprise patient treatment information.

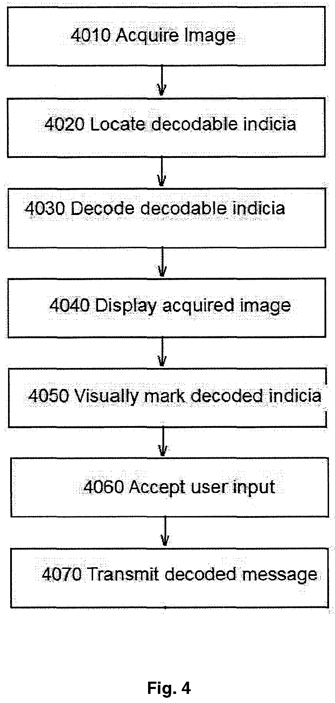

One embodiment of a method of processing multiple decodable indicia by mobile computer is schematically illustrated by the block diagram of FIG. 4. The method can be implemented using one or more processors of one or more computers. In one illustrative embodiment, the method can be implemented using one or more processors of mobile computer 100. Alternatively, the method can be implemented using one or more processors of two or more computers.

At step 4010, mobile computer 100 can acquire an image of one or more objects bearing one or more decodable indicia within the field of view the mobile computer's imaging device.

At step 4020, mobile computer 100 can locate one or more decodable indicia within the acquired image.

At step 4030, mobile computer 100 can decode at least one decodable indicium of the decodable indicia located within the acquired image.

At step 4040, mobile computer 100 can display the acquired image on display 1304.

At step 4050, mobile computer 100 can visually mark the one or more successfully decoded decodable indicia within the displayed image. In one illustrative embodiment, mobile computer 100 can highlight the successfully decoded decodable indicia. Alternatively, mobile computer 100 can draw a bounding box around the successfully decoded decodable indicia. In one illustrative embodiment, a circular dot or some other visual marker can be placed in or around the center of the successfully decoded decodable indicia.

At step 4060, mobile computer 100 can accept the user input selecting at least one decodable indicia of the displayed one or more decodable indicia. In one illustrative embodiment, selecting one or more decodable indicia can be performed via touch screen by the user's tapping the screen areas containing the images of one or more decodable indicia. In another illustrative embodiment, the user's repetitive tapping the screen area containing a decodable indicia image can toggle on or off the inclusion of the indicia and/or a decoded message corresponding to the indicia into the sequence of messages to be transmitted to an external computer.

At step 4070, mobile computer 100 can transmit to an external computer at least one decoded message corresponding to the at least one decodable indicia, and the method can terminate.

In one illustrative embodiment, mobile computer 100 can accept user input indicating which indicia and in which order need to be used by one or more applications. Responsive to accepting the user input selecting two or more decodable indicia, the mobile computer can transmit to an external computer, in the order indicated by the user, the decoded messages corresponding to the selected indicia, and the method can terminate.

In another aspect, there is provided a computer-readable storage medium comprising executable instructions capable of configuring one or more processors for implementing the above described method.

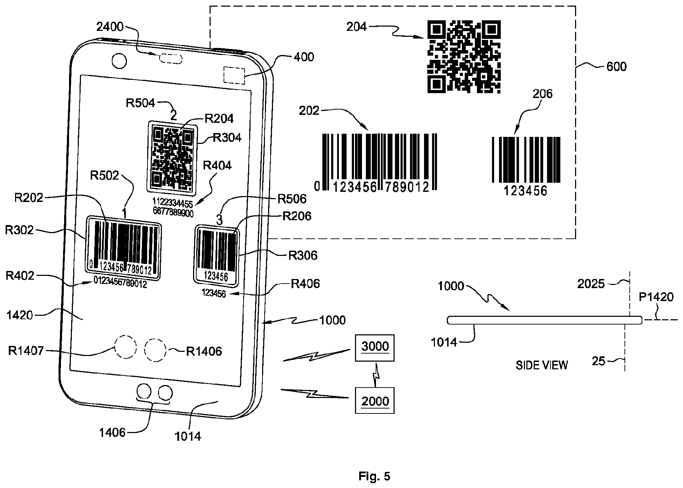

Referring to FIG. 5 an imaging apparatus 1000 can be operative to capture a frame of image data representing a scene having a plurality of decodable indicia and display image data corresponding the decodable indicia. The imaging apparatus 1000 can be operative so that responsively to a user input control decoded message data of a selected decodable indicia is selectively output. The selective output can be, *e.g.,* to a different functional block of a current program performing the display, and/or a different program, the image apparatus and/or to one or more external processor equipped apparatus for use in one or more program therein.

In the embodiment of FIG. 5, imaging apparatus 1000 can include an imaging assembly 400 for use in capturing a frame of image data representing a scene within a field of view 600 of imaging assembly 400. Because apparatus 1000 includes imaging assembly 400, field of view 600 can also be regarded as a field of view of apparatus 1000. The scene within field of view 600 as indicated in the example of FIG. 5 can include a plurality of decodable indicia, *e.g.,* bar codes 202, 204, 206. Decodable indicia can also include text including OCR characters. In the development of apparatus and methods herein it was determined that without adaptations as are set forth herein an unwanted decoded message data can be output to a designated output destination.. For example, referring to the scene of FIG. 5 an operator may wish that a decoded message decoded by processing a representation of bar code 206 be output; however, a decoded message of bar code 204 may instead be inadvertently output, *e.g.,* if apparatus 1000 is programmed to decode and output a center-most decodable indicia. The imaging apparatus 1000 can be operative so that responsively to a user input control decoded message data of a selected decodable indicia, *e.g.,* a selected one or more of decodable indicia provided by bar code 202, bar code 204, and bar code 206 is selectively output. In a further aspect, imaging apparatus 1000 can be operative so that imaging apparatus 1000 is restricted from outputting decoded message data of a certain indicia unless the operator inputs a control to apparatus 1000 to output decoded message data of the certain decodable indicia.

An exemplary hardware platform for apparatus 1000 is set forth in FIG. 2. Imaging apparatus 1000 can include an image sensor 1032 comprising a multiple pixel image sensor array 1033 having pixels arranged in rows and columns of pixels, associated column circuitry 1034 and row circuitry 1035. Associated with the image sensor 1032 can be amplifier circuitry 1036, and an analog to digital converter 1037 which converts image information in the form of analog signals read out of image sensor array 1033 into image information in the form of digital signals. Image sensor 1032 can also have an associated timing and control circuit 1038 for use in controlling *e.g.,* the exposure period of image sensor 1032, gain applied to the amplifier 1036. The noted circuit components 1032, 1036, 1037, and 1038 can be packaged into an imaging device 1040 (*e.g.,* a common image sensor integrated circuit). In one example, imaging device 1040 can be provided by an MT9V022 image sensor integrated circuit available from Micron Technology, Inc. In another example, imaging device 1040 can incorporate a Bayer pattern filter. In such an embodiment, CPU 1060 prior to subjecting a frame to further processing can interpolate pixel values intermediate of green pixel values for development of a monochrome frame of image data.

In the course of operation of apparatus 1000 image signals can be read out of image sensor 1032, converted and stored into a system memory such as RAM 1080. A memory 1085 of apparatus 1000 can include RAM 1080, a nonvolatile memory such as EPROM 1082 and a storage memory device 1084 such as may be provided by a flash memory or a hard drive memory. In one embodiment, apparatus 1000 can include CPU 1060 which can be adapted to read out image data stored in memory 1080 and subject such image data to various image processing algorithms. Apparatus 1000 can include a direct memory access unit (DMA) 1070 for routing image information read out from image sensor 1032 that has been subject to conversion to RAM 1080. In another embodiment, apparatus 1000 can employ a system bus providing for bus arbitration mechanism (*e.g*., a PCI bus) thus eliminating the need for a central DMA controller. A skilled artisan would appreciate that other embodiments of the system bus architecture and/or direct memory access components providing for efficient data transfer between the image sensor 1032 and RAM 1080 are within the scope of the invention.

Referring to further aspects of apparatus 1000, lens assembly 200 can be adapted for focusing an image of a decodable indicia 15 located within a field of view 1240 on a substrate 1250 onto image sensor array 1033. Imaging light rays can be transmitted about imaging axis 25. Lens assembly 200, in one embodiment, can be adapted to be capable of multiple focal lengths and multiple best focus distances. An imaging assembly 400 of apparatus 1000 can include lens assembly 200 and image sensor array 1033.

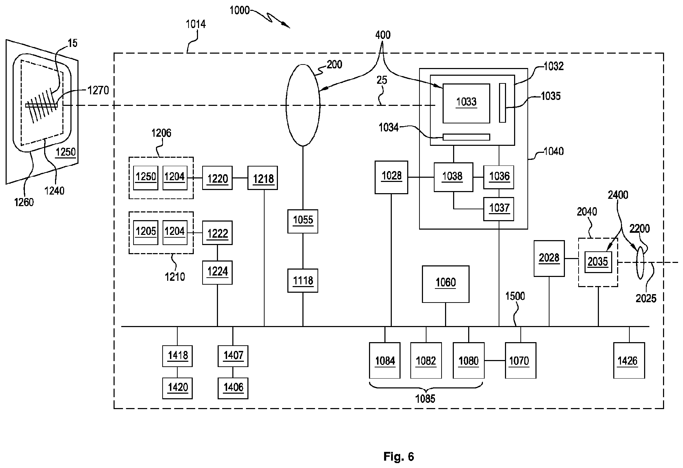

Apparatus 1000 can also include an illumination pattern light source bank 1204 and associated light shaping optics 1205 for generating an illumination pattern 1260 substantially corresponding to a field of view 1240 of apparatus 1000. The combination of bank 1204 and optics 1205 can be regarded as an illumination pattern generator 1206. Apparatus 1000 can also include an aiming pattern light source bank 1208 and associated light shaping optics 1209 for generating an aiming pattern 1270 on substrate 1250. The combination of bank 1208 and optics 1209 can be regarded as an aiming pattern generator 1210. In use, apparatus 1000 can be oriented by an operator with respect to a substrate 1250 bearing decodable indicia 15 in such manner that aiming pattern 1270 is projected on a decodable indicia 15. In the example of FIG. 6, decodable indicia 15 is provided by a 1D bar code symbol. Decodable indicia 15 could also be provided *e.g*., by a 2D bar code symbol or decodable text such as optical character recognition (OCR) characters. In the example of FIG. 5, decodable indicia 202 is provided by a UPC bar code symbol, decodable indicia 204 is provided by a QR code symbol and decodable indicia 206 is provided by a code 128 symbol. Each of illumination pattern light source bank 1204 and aiming pattern light source bank 1208 can include one or more light sources. Lens assembly 200 can be controlled with use of electrical power input unit 1055 which provides energy for changing a plane of optimal focus of lens assembly 200. In one embodiment, an electrical power input unit 1055 can operate as a controlled voltage source, and in another embodiment, as a controlled current source. Illumination pattern light source bank 1204 can be controlled with use of illumination pattern light source control circuit 1220. Aiming pattern light source bank 1208 can be controlled with use of aiming pattern light source bank control circuit 1222. Electrical power input unit 1055 can apply signals for changing optical characteristics of lens assembly 200, *e.g.,* for changing a focal length and/or a best focus distance of (a plane of optimum focus of) lens assembly 200. Illumination pattern light source bank control circuit 1220 can send signals to illumination pattern light source bank 1204, *e.g.,* for changing a level of illumination output by illumination pattern light source bank 1204. Aiming pattern light source bank control circuit 1222 can send signals to aiming pattern light source bank 1208, *e.g.,* for changing a lumen of illumination output by aiming pattern light source bank 1208. In one embodiment, imaging apparatus 1000 can be devoid of elements that project an illumination pattern.

Apparatus 1000 can also include a number of peripheral devices including trigger R1408 which may be used to make active a trigger signal for activating frame readout and capture and/or certain decoding processes and/or other processes. Apparatus 1000 can be adapted so that manual actuation of trigger R1406 activates a trigger signal and initiates a decode attempt. In the embodiment of FIG. 5, trigger R1408 is provided by a virtual trigger that is displayed on display 1420. A hardware actuator *e.g*., of keyboard 1406 can also be configured as a trigger. Apparatus 1000 can be operative so that in response to activation of a trigger signal, a succession of frames can be read out and captured by way of read out of image information from image sensor array 1033 (typically in the form of analog signals) and then storage of the image information after conversion into memory 1080 (which can buffer one or more of the succession of frames at a given time). CPU 1060 can be operative to subject one or more of the succession of frames to a decode attempt. For attempting to decode a bar code symbol, CPU 1060 can process image data of a frame corresponding to a line of pixel positions (*e.g.,* a row, a column, or a diagonal set of pixel positions) to determine a spatial pattern of dark and light cells and can convert each light and dark cell pattern determined into a character or character string via table lookup. Where a decodable indicia representation is a 2D bar code symbology, a decode attempt can comprise the steps of locating a finder pattern using a feature detection algorithm, locating matrix lines intersecting the finder pattern according to a predetermined relationship with the finder pattern, determining a pattern of dark and light cells along the matrix lines, and converting each light pattern into a character or character string via table lookup. In one embodiment, CPU 1060 can run one or more program 1800 as set forth herein when decoding decodable indicia. In some embodiments, as set forth herein, a trigger signal can be made active by entering a selective decoded message data output mode in which apparatus 1000 can selectively output candidate decoded message data responsively to an operator input control to select for output decoded message data of a certain decodable indicia. In such an operating mode in one embodiment, apparatus 1000 can be operative to continually attempt to decode frames of a succession of frames and responsively to an operator input control can output decoded message data of a subset *e.g*., one, frames successfully decoded during operation in the mode.

Apparatus 1000 can include various interface circuits for coupling various of the peripheral devices to system address/data bus (system bus) 1500, for communication with CPU 1060 also coupled to system bus 1500. Apparatus 1000 can include interface circuit 1028 for coupling image sensor timing and control circuit 1038 to system bus 1500, interface circuit 1118 for coupling electrical power input unit 1055 to system bus 1500, interface circuit 1218 for coupling illumination light source bank control circuit 1220 to system bus 1500, interface circuit 1224 for coupling aiming light source bank control circuit 1222 to system bus 1500, and interface circuit 1404 for coupling keyboard 1406 to system bus 1500. Apparatus 1000 can also include a display 1420 coupled to system bus 1500 and in communication with CPU 1060, via interface 1418. In another aspect apparatus 1000 can include a network communication interface 1426 couple to system bus 1500. Network communication interface 1426 can be *e.g.,* one or more of an IEEE 802.11 interface a Bluetooth interface or a cellular radio interface. In one embodiment server 2000, server 3000 can include CPU 1060 memory 1085 bus 1500 and communication interface 1426 components corresponding to those described in connection with apparatus 1000. In one embodiment, apparatus 1000, server 2000, and server 3000 can be in communication with one another via, *e.g.,* the TCP/UDP or TCP/IP suite of network communication protocols. Display 1420 in one embodiment can be a touch screen display having a touch panel associated to display apparatus.

A succession of frames of image data that can be captured and subject to the described processing can be full frames (including pixel values corresponding to the maximum number of pixels subject to readout during a course of operation of apparatus 1000). In one example a maximum number of pixels is each pixel of image sensor array 1033. A succession of frames of image data that can be captured and subject to the described processing can also be "windowed frames" comprising pixel values corresponding to less than a maximum number of pixels subject to readout during a course of operation of apparatus 1000. A succession of frames of image data that can be captured and subject to the described processing can also comprise a combination of full frames and windowed frames. A full frame can be captured by selectively addressing for readout pixels of image sensor 1032 corresponding to the full frame. A windowed frame can be captured by selectively addressing for readout pixels of image sensor 1032 corresponding to the windowed frame.

In another aspect, apparatus 1000 can include a second imaging device 2040 (*e.g.,* a second image sensor integrated circuit) disposed in combination with a second imaging lens assembly 2200 for capture of image data in the manner set forth in reference to imaging device 1040. Second imaging device 2040 can include an image sensor array 2033 and the remaining elements set forth with reference to imaging device 1040. A second imaging assembly 2400 of apparatus 1000 can include an image sensor assembly 2033 and lens assembly 2200. Second imaging device 2040 can be in communication with system bus 1500 via interface 2028. Second imaging device 2040 can be aperture for use in capturing frames of image data in the manner of imaging device 1040. Received light rays received by imaging assembly 400 can be received about imaging axis 25. Received light rays received by imaging assembly 2400 can be received by imaging axis 2025. Imaging axis 25 can extend downwardly from apparatus 1000. Imaging axis 2025 can extend upwardly from apparatus 1000. Indicated by the side view reference view of FIG. 5 imaging axis 25 can extend vertically downward and can be perpendicular relative to a display plane P420 on which display 1420 extends. Imaging axis 2025 can extend vertically downward and can be perpendicular relative to display plane P1420 on which display 1420 extends. Apparatus 1000 can capture frames of image data at a rate known as a frame rate. A typical frame rate is 60 frames per second (FPS) which translates to a frame time (frame period) of 16.6 ms. Another typical frame rate is 30 frames per second (FPS) which translates to a frame time (frame period) of 33.3 ms per frame.

Further regarding apparatus 1000, an electrical power input applied by electrical power input unit 1055 for establishing a desired lens setting of lens assembly 200 can be responsive, *e.g.,* to a sensed condition or an operator input command.

A physical form view of apparatus 1000 in one embodiment is shown in FIG. 5. Display 1420 and keyboard 1406 can be disposed on a common side of a hand held housing 1014 as shown in FIG. 5. Display 1420 and keyboard 1406 in combination can be regarded as a user interface of apparatus 1000. Display 1420 can be a touch screen display in one embodiment. A user interface of apparatus 1000 can also be provided by configuring apparatus 1000 to be operative to be reprogrammed by decoding of programming bar code symbols. Apparatus 1000 can include a hand held housing 1014 that supports imaging assembly 400 and imaging assembly 2400 that can be disposed in (*e.g.,* entirely or partially) in hand held housing 1014.

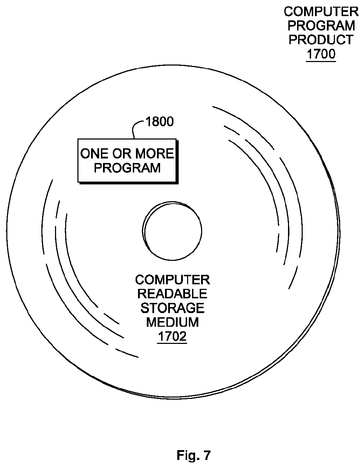

As set forth in FIG. 7 there can be provided a computer program product 1700 comprising a computer readable storage medium 1702 storing one or more program 1800, the one or more program 1800 comprising program code logic for facilitating selective decoded message data. One or more program 1800 can include computer executable instructions executable by a processor *e.g*., CPU 1060 of apparatus 1000.

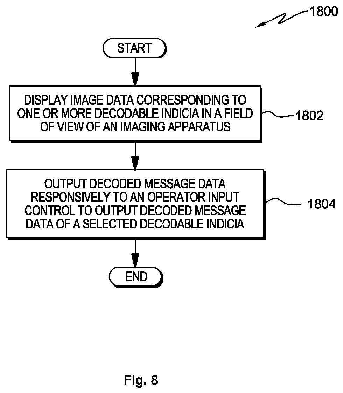

In one embodiment, CPU 1060 of apparatus 1000 can be operative to run the computer executable one or more program 1800 having the functions that are indicated in the flow diagram of FIG. 8. At block 1802 one or more program 1800 can display image data corresponding to a plurality of decodable indicia in a field of view of apparatus 1000 *e.g.,* a field of view 600 as set forth in FIG. 5. At block 1804 one or more program 1800 can output to an output destination decoded message data responsively to an operator input control to output decoded message data of a selected decodable indicia.

In the performance of block 1802 in one embodiment one or more program 1800 in the performance of block 1802 (display image data corresponding to one or more decodable indicia) can send for display on display1420 image data of a frame of image data captured by imaging apparatus 1000. In the specific example of FIG. 5 displayed image data displayed on display 1420 can include representations R202, R204, R206 of decodable indicia *e.g.*, decodable indicia 202, 204, 206 shown as being provided by bar code symbols within field of view 600. The frame of image data can be a contemporaneously captured frame captured using apparatus 1000. In one embodiment the image data that is displayed can be formatted by highlighting representations of decodable indicia that can be decoded using currently captured image data. One or more program 1800 for determining whether decodable indicia can be decoded using currently captured image data can attempt to decode the decodable indicia using currently captured image data, *e.g.,* currently stored *e.g.,* buffered image data for processing, *e.g.,* as may be buffered in RAM 1080. One or more program 1800 can determine that a decodable indicia is decodable by successfully decoding the indicia. In another embodiment one or more program 1800 can determine that a decodable indicia is decodable by successfully locating the decodable indicia in a currently captured frame of image data. In one embodiment, a displayed highlight that highlights a representation of a decodable indicia can be a border, *e.g.,* border R302, R304, R306. In another embodiment of a highlighting, a displayed representation of decodable indicia that is determined to be decodable using currently captured image data is displayed using a selective flashing display (image data representing a scene can be displayed with only areas representing decodable indicia displayed in a flashing display). In another example a highlighting can include decoded messages R402, R404, R406 of a decodable indicia being represented by displayed image data. While various highlighting schemes are possible, it will be understood that no highlighting is necessary. In one embodiment, one or more program 1800 provisions apparatus 1000 so that an operator can select a certain decodable indicia without any highlighting of the decodable indicia (*e.g.*, mere display of a representation of the decodable indicia without any highlighting). In a further aspect there is set forth herein a method comprising displaying, using a processor, image data corresponding to one or more decodable indicia in a field of view of an imaging apparatus, and outputting, using the processor, decoded message data of a selected decoded indicia responsively to an operator input control to output decoded message data of a selected decodable indicia of the one or more decodable indicia, wherein an operator input control to output decoded message data of a selected decodable indicia comprises a touching of a location of a display that displays a representation of the selected decodable indicia selected by the touching. Another selection method set forth herein can be used in place of or in addition to the touching. In accordance with one or more program 1800, the decoded message data of the selected decodable indicia can be determined, *e.g.*, prior to or after the time of a selection of the selected decodable indicia.

In one embodiment, there is set forth herein a method comprising displaying, using a processor, image data corresponding to one or more decodable indicia in a field of view of an imaging apparatus, wherein the one or more decodable indicia has been subject to decoding processing at a time of the displaying, and outputting, using the processor, decoded message data of a selected decoded indicia responsively to an operator input control to output decoded message data of a selected decodable indicia of the one or more decodable indicia. In one embodiment the decoding processing comprises attempting to decode. In one embodiment the decoding processing includes completing decoding by determining a decoded message. In one embodiment, the decoding processing comprises determining a location of a decodable indicia (typically a first step in a decode attempt). By determining a location of a decodable indicia with no further decoding processing steps prior to display of image data of frame on display 1420, one or more program 1800 is able to monitor an output of display interface 1418 of display 1420 (where provided by a touch screen display) to determine whether an area of a display corresponding to a location of a displayed decodable indicia representation has been touched.

In the performance of block 1804 one or more program 1800 can selectively output decoded message data responsively to a use input control to selectively output decoded message data. The selective output can be to an output destination. In one embodiment the output destination can be a different function block of one or more program 1800 running on CPU 1060. In one embodiment the output destination can be to a program running on CPU 1060 other than one or more program 1800. In one example the output destination can be an external processor equipped apparatus, *e.g*., server 2000 or server 3000 for use by one or more program running thereon. In the performance of block 1804, where the output destination is an external processor equipped apparatus, CPU 1060 can communicate with a network communication interface 1426. A communication between apparatus 1000 and server 2000 or server 3000 can employ a suitable protocol running over the TCP/UDP transport layer, *e.g.,* HTTP or XML.

In the performance of block 1804 for providing the function of determining an operator selection has occurred, one or more program 1800 can monitor for an occurrence of an operator input control to transmit decoded message data of a selected decodable indicia. As will be set forth further herein, monitoring of which one or more program 1800 can detect for can include, *e.g.,* tactile monitoring *(e.g.,* a touching of display 1420 where provided by a touch screen), acoustical monitoring, (*e.g*., where an operator inputs a voice command), an image based monitoring, (*e*.*g*., one or more program 1800 determines where an operator is looking based on processing of image data captured using an imaging assembly).

In one embodiment at block 1802 one or more program 1800 processes a single frame of image data, *e.g.,* to display image data of the frame on display 1420, to attempt to decode the frame of image data, to determine whether the frame of image data is decodable using currently captured image data, to highlight representations of decodable indicia determined to be decodable using currently captured image data. In such embodiment, one or more program 1800 can display a still frame in the performance of block 1802.

In one embodiment, one or more program 1800 at block 1802 processes a plurality of frames of image data, *e.g.,* to display image data of frames of a succession of frames of image data on display 1420 (a rendering of a motion image), to attempt to decode frames of a succession of frames of image data, to determine whether frames of a succession of frames of image data are decodable using currently captured image data, to highlight representations of decodable indicia in frames of a succession of frames determined to be decodable using currently captured image data.

In an example of one or more program 1800 at block 1802 processing a plurality of frames of image data, one or more program 1800 can obtain frames of a sequence of frames output by a camera library running on CPU 1060. In one embodiment a program of one or more program can control imaging device 1040 for image capture as set forth herein. One or more program 1800 can attempt to decode each incoming frame with a timeout (quits the decoding if decoding is not complete within a specified time). If one or more program 1800 successfully decodes a decodable indicia (or otherwise determines it to be decodable using currently captured image data), one or more program 1800 can highlight the representation of the decodable indicia in the frame image data. When one or more program 1800 decodes a decodable indicia it can determine coordinates of the decodable indicia representations and associate that coordinate data to a decoded message. One or more program 1800 can provide highlights to a decodable indicia representation by appropriately changing values of pixels in locations proximate the decodable indicia representation. If one or more or more program 1800 is not successful in decoding a frame of image data of a succession of frames, it may nevertheless send image data of the frame to display 1420. A succession of displayed frames will appear to have highlights that track a location of a decodable indicia representation over a succession of frames provided a suitable percentage of the frames have decodable indicia representations that are highlighted. Also, in some instances one or more program 1800 can display a prior frame on display 1420 with highlighted decodable indicia representations after it has decoded it after it has displayed a subsequent frame. Such "out of sequence" display however is unlikely to be perceived by an operator if decoding and highlighting is performed quickly enough.

In one embodiment functionalities set forth herein in connection with the flow diagram of FIG. 8 can be made active on activation of a selective decodable message data output mode. In such an operating mode in one embodiment, apparatus 1000 can be operative to continually attempt to decode frames of a succession of frames and responsively to an operator input control can output decoded message data of a subset (*e.g*., one, a select few) of decodable indicia represented frames successfully decoded during operation in the mode. A selective decodable message data output mode allows an operator to select (filter) which decoded message data out of a plurality of candidate decoded message data should be output to an output destination.

In one embodiment, a selective decodable message data output mode can be made active by actuation of virtual mode button R1407 or virtual trigger button R1406 (in one specific embodiment the selective decodable message data output mode is provided as a special configuration wherein the mode is activated rather than standard decoding when trigger button R1406 is activated). In one embodiment of the selective decodable message data output mode, activation of the mode results in one or more program 1800 at block 1802 displaying image data of frames of a succession of frames (a motion image) on display 1420 with highlighting of decodable indicia representation of decodable indicia that can be decoded using currently captured image data. Responsively to an operator input control to select a decodable indicia, one or more program can selectively output decoded message data of the decodable indicia. Virtual actuators R1406 and R1407 are shown in dashed view in FIG. 5 since one or more program 1800 can be operative so that virtual actuators R1406 and R1407 are not displayed at a same time the remaining shown as displayed elements set forth in FIG. 5.

In the specific use case illustrated with reference to FIG. 5 it is shown that apparatus 1000 can be used to facilitate selection of decodable message data of, for example one out of a plurality of decodable indicia, each of the plurality of decodable indicia 202, 204, 206 having a corresponding displayed representation R202, R204, R206. However, in an important aspect apparatus 1000 in accordance with the functions of one or program 1800 set forth in FIG. 8 need not be used to allow selection of one or more out of a plurality of decodable indicia, but rather may be used to select (or not select) decoded message data of a single decodable indicia for selective output. As set forth herein one or more program 1800 can be operative so that apparatus 1000 is restricted from outputting to a designated output destination decoded message data unless the decoded message data is of an operator selected decodable indicia designated as being selected by a predetermined operator input control. In one aspect, apparatus 1000 can be used to allow an operator to select between first and second decodable indicia. Apparatus 1000 can display representations of the first and second indicia simultaneously (if both are in field of view 600 simultaneously) or sequentially (if apparatus 1000 is moved between locations so that the first and second decodable indicia are in a field of view 600 sequentially). In the case where apparatus 1000 is moved between locations it may sequentially decode a plurality of decodable indicia so that a plurality of the decoded massage data, *e.g*., first decoded message data, second decoded message data, are candidates for output. Candidate decoded message data that is available for selective output can be of decoded message data determined by decoding spatially separated decodable indicia (of a common frame) or sequentially separated decodable indicia (represented in frames captured at different times).

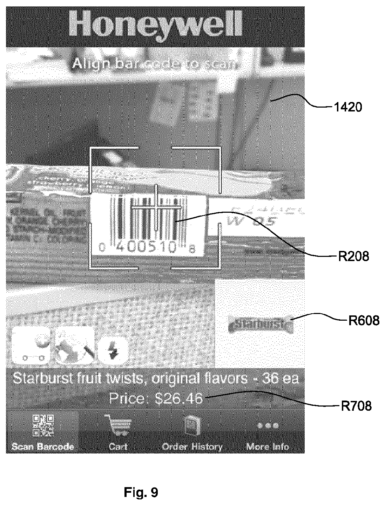

For example, as set forth in FIG. 9 display 1420 is shown as displaying a representation R208 corresponding to a single decodable indicia. One or more program 1800 at block 1802 and at block 1804 can provision apparatus 1000 to allow an operator to select or not select the decodable indicia of the single displayed decodable indicia representation R208, thus allowing "filtering," the non-selection" of unwanted decoded message data. An operator may wish to pass over a certain decodable indicia, *e.g.,* if it does not encode the data that is desired to be output to a designated output destination.

One or more program 1800 at block 1802 can display highlights of a decodable indicia. Such highlights are useful in all use cases including where apparatus 1000 is used to allow an operator to select or not select (pass over) decodable indicia of a single decodable indicia representation. For example, where the highlight is a display of a decoded message, the display allows the operator to discern whether the data is the data that the operator wishes to output.

In one aspect one or more program 1800 can message resources in providing a highlight for display on display 1420. The resources can be *e.g.,* one or more database stored locally on apparatus 1000 or externally *e.g.,* on local server (*e.g.,* a store server if in a retail store environment), or a remote server 3000. In one embodiment, the database is a price lookup table. In another embodiment the database is a lookup table correlating product images to decoded messages. One example is the GOOGLE SHOPPER API which on messaging with a decoded message can return a product image. One or more program 1800 at block 1802 can message a resource and in one embodiment can message an external resource, *e.g*., a database of server 2000 or server 3000. Referring again to FIG. 9, FIG. 9 illustrates a returned product image displayed as a highlight R608. One or more program 1800 also displays a highlight in the form of a displayed price R708. One or more program 1800 at block 1802 can determine price data by messaging a price lookup table stored locally on apparatus 1000 or externally *e.g*., on server 2000 or server 3000.

After one or more program 1800 determines a data item by messaging an external resource a first time during a running of one or more program 1800 it can store the data item (a price, an image) in a cache memory location of RAM 1080 so that one or more program 1800 can avoid messaging an external resource each time it decodes a message when performing block 1802, thus increasing the display time for displaying the highlight. Also, price lookup tables and image databases can be stored locally on apparatus 1000. It has been mentioned that a displayed highlight can include a decoded message. When a decodable indicia is decoded data other than a decoded message can be provided. Such other information can include, *e.g*., a time elapsed to decode, location coordinates of the decodable indicia, number of characters, type of decodable indicia, *e.g.,* type of bar code symbology, and other metadata, *e.g.,* metadata that describes a purpose of the data, an internal tracking code or an encoded address. In one embodiments one or more program 1800 at block 1802 one or more item of such other data as a highlight for use in aiding an operator in determining whether the operator would like to select a certain decodable indicia.

In the example shown in FIG. 9 product image highlight R608 is displayed in a location at a designated location of display 1420 in a window which may be spatially separated from a decodable indicia representation.

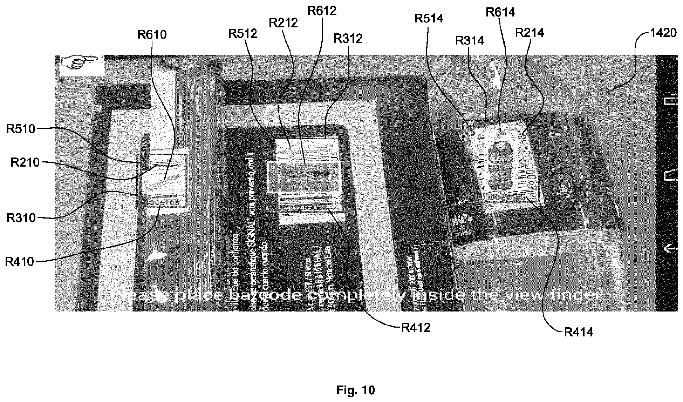

In the example of FIG. 10 one or more program 1800 at block 1802 displays product images at the location of each product image's associated decodable indicia representation. Product image highlight R610 is displayed at a location of decodable indicia representation R210, product image highlight R612 is displayed at a location of decodable indicia representation R212. Product image highlight R614 is displayed at a location of decodable indicia representation R214. One or more program 1800 at block 1802 can display product images displayed as highlights in the example of FIG. 10 can be displayed in semi-transparent form so that a representation of a decodable indicia R210, R212, R214 can be viewed "through" the product image. For display of semitransparent product image one or more program 1800 at block 1802 can display the image in a low resolution. A display of a product image as a highlight of a decodable indicia can aid an operator in determining whether the displayed indicia corresponds to a decodable indicia that the operator wishes to select.

At block 1802 one or more program 1800 can display image data corresponding to a decodable indicia. In one example the image data corresponding to a decodable indicia can comprise a decodable indicia representation. In one example the image data corresponding to a decodable indicia can comprise a decodable indicia representation and one or more associated highlight. In one example the image data corresponding to a decodable indicia can comprise a highlight of a decodable indicia but may be devoid of a representation of the decodable indicia. Referring to the illustrative embodiment as set forth in FIG. 10 the representations of the bar codes (serving as decodable indicia) can be removed and replaced with a display of one or more highlight of each decodable indicia.

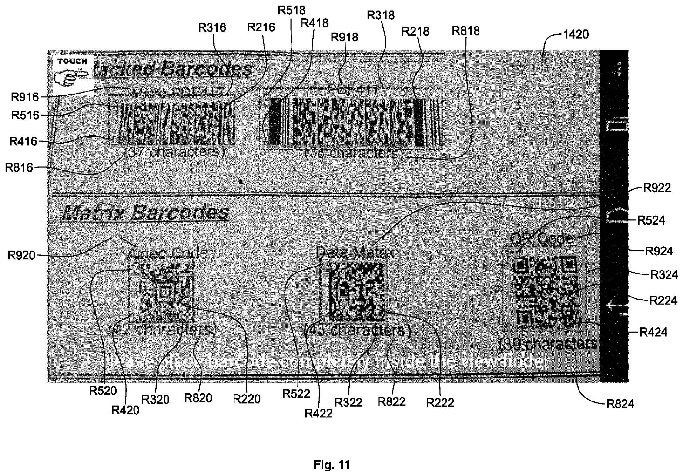

At block 1804 one or more program 1800 can output decoded message data. The decoded message data can include in one example (a) a decoded message. The decoded message data can also include for example (b) other data determined when a decodable indicia is decoded *(e.g.,* elapsed time to decode, coordinate information, number of characters, type of code). For example as shown in FIG. 11, highlights can include text indicating number of characters, *e.g*., R820 and/or type of decodable indicia R916 (type of bar code symbology in the specific example of FIG. 11). The decoded message data can also include for example (c) data determined by messaging a resource using a decoded message, *e.g.*, a product price, a product image. Decoded message data that is output at block 1804 can include any combination of the (a) (b) and (c) types of data, *e.g.,* can include data of all of the types (a) (b) and (c) or just one or two of the types, *e.g*., just type (a) just type (b), just type (c).

As has been set forth herein one or more program 1800 at block 1804 can monitor for selection of a decodable indicia by an operator. A monitoring by one or more program 1800 can include, *e.g.,* tactile monitoring (*e.g.,* a touching of display 1420 where provided by a touch screen), acoustical monitoring, (*e.g.*, where an operator inputs a voice command), an image based monitoring, (*e.g.*, one or more program 1800 determines where an operator is looking based on processing of image data captured using an imaging assembly).

In one example of monitoring performed at block 1804, where display 1420 is provided by a touch screen display, one or more program 1800 at block 1804 can cause CPU 1060 to be in communication with display interface 1418 to monitor an input to the display 1420. In one embodiment, one or more program 1800 in the performance of block 1804 can provision apparatus 1000 so that a touching by an operator of a location on a display 1420 that displays a representation of a decodable indicia is determined to be a control to selectively output decoded message data of the displayed decodable indicia.

Accordingly, referring to FIG. 5 a touching of representation R202 results in output of decoded message data of decodable indicia 202 in one embodiment. A touching of representation R204 results in output of a decoded message of decodable indicia 204 in one embodiment. A touching of representation R206 results in output of a decoded message of decodable indicia 206 in one embodiment. One or more program 1800 can be operative so that an operator can select a decodable indicia by touching a displayed highlight rather than a displayed decodable indicia representation (where displayed spatially separately. For example referring to FIG. 9 an operator may touch highlight R608 in order to cause output of decoded message data of the decodable indicia corresponding to decodable indicia representation R208. One or more program 1800 can provision apparatus 1000 so that an operator can select a decodable indicia by touching a displayed highlight of a decodable indicia in addition to or in place of a representation of a decodable indicia. One or more program 1800 can provision apparatus 1000 so that a touch sensitivity of display 1420 is provided with appropriately configured active periods so that, an *e.g.,* an operator who touches an area of a displayed highlight within a timeout period after it ceases to be displayed nevertheless designates a selection of a decodable indicia. One or more program 1800 can in one embodiment provision apparatus 1000 so that an operator can move (e*.g.* with a pointer controller incorporated on apparatus 1000) a pointer to image data corresponding to a decodable indicia for selection of decodable indicia.

In another example of a monitoring performed at block 1804 one or more program 1800 at block 1804 can cause CPU 1060 to be in communication with a voice recognition module that processes voice data received through audio input interface 1434. A voice recognition module can discriminate various voice messages. In one example such voice recognition module can be provided by DRAGON DICTATION for iOS available from NUANCE COMMUNICATIONS, INC. In one example at block 1804 one or more program 1800 can cause an index to be displayed with the displayed representations of decodable indicia. The displayed indices can be for example number indices "1" "2," "3" as indicated by displayed representations R502, R504, R506 in FIG. 5 and processed voice messages can be messages corresponding to one or more of the displayed indices, *e.g*., voice messages corresponding to the spoken words "ONE," "TWO" or "THREE." One or more program 1800 can be operative in the referenced example to cause decoded message data of a decodable indicia of representation R202 to be output responsively to an operator saying the word "ONE," to cause decoded message data of the decodable indicia of representation R204 to be output responsively to an operator saying the word "TWO" and to cause decoded message data of the decodable indicia of representation R206 to be output responsively to an operator saying the word "THREE."

In another example of a monitoring performed at block 1804 one or more program can cause CPU 1060 to determine when a certain decodable indicia has been selected based on processed image data captured with use of an imaging assembly. In one example, one or more program 1800 at block 1804 can cause CPU 1060 to determine that a certain decodable indicia has been selected based on processed image data captured by imaging assembly 2400 having upward extending imaging axis 2025. Imaging assembly 2400 can include a field of view that includes an operator. In one embodiment, frames captured using imaging assembly 2400 can be processed for determining eye tracking information, *e.g*., retinal axes in one embodiment. Software modules that can be employed for determination of eye tracking information include VISIONLAB.NET available from XENTRIX and ISCAN eye tracking software available from Iscan, Inc. In that the relative positions of the displayed locations of representations R202, R204, and R206 and of imaging axis 2025 are known eye tracking and display position information can be processed for determination of which decodable indicia representation, *e.g.*, R202, R204, R206 an operator is currently looking at. The decodable indicia corresponding to the representation that the operator is looking at can be determined to be the selected decodable indicia.

In another embodiment of a monitoring that can be performed at block 1804 one or more program 1800 can be run on an apparatus 1000 that is provided by an eyewear processor equipped apparatus. In such an imaging apparatus display 1420 can be provided by a semi-transparent display mounted on an eyewear frame. In such embodiment, apparatus 100 can include an accelerometer and a gyroscope and can be appropriately configured so that an operator can control a movement of a pointer to a location of image data corresponding to a decodable indicia for selection of a decodable indicia. In such embodiment, an operator can control a movement of a pointer via head movement, or *e.g.* via voice or via a mechanical pointer controller (*e.g.,* a control pad). An example of an eyewear incorporated processor equipped apparatus is the eyewear based processor equipped apparatus of the GOOGLE GLASS project.

In one aspect the one or more program 1800 provisions apparatus 1000 to restrict to decoded message data of a decodable indicia from being output to an output destination unless an operator inputs an operator control input to apparatus1000 to output decoded message data of a selected decodable indicia, *e.g.,* the decodable indicia 202, 204, 206 of representations R202, R204, R206 which may be selected by a method set forth herein. In one embodiment apparatus 1000 is configured so that one or more program 1800 so restricts apparatus 1000 from outputting decoded message data other than decoded message data of selected decodable indicia during each possible operating mode of apparatus 1000. In one embodiment apparatus 1000 is configured so that one or more program 1800 so restricts apparatus 1000 from outputting decoded message data other than decoded message data of selected decodable indicia during only select operating modes of apparatus 1000 (and not each possible operating mode).

Regarding highlights that are set forth in the various views, highlights R3XX are displayed borders, highlights R4XX are displayed decoded messages, highlights R5XX are displayed indexes, highlights R6XX are displayed product images, highlight R7XX is a displayed price, highlights R8XX is a displayed character count (number of characters), highlight R9XX is a displayed decodable indicia type. The noted types of highlights can be displayed in any possible combination, *e.g*., only one of them displayed in association with a decodable indicia, all of them displayed in association with a decodable indicia. In one embodiment a one or more highlight displayed in association with a decodable indicia can be displayed in a certain color *e.g.,* a predetermined color. In one embodiment the certain color is a bright color, *e.g.,* red so at as to increase an attention directing effect. Regarding FIG. 5, highlights R302, R304 and R306 are border highlights, highlights R404, R406, and R408 are decoded message highlights, highlights R502, R504 and R506 are index highlights. Regarding FIG. 9, highlight R608 is a product image highlight and highlight R708 is a price highlight. Regarding FIG. 10, highlights R310, R312 and R314 are border highlights, highlights R410, R412, and R414 are decoded message highlights, highlights R510, R512 and R514 are index highlights. Regarding FIG. 11, R216, R218, R220, R222 and R224 are indicium representations, highlights R316, R318, R320, R322 and R324 are border highlights, highlights R416, R418, R420, R422 and R424 are decoded message highlights, highlights R516, R518, R520, R522 and R524 are index highlights, highlights R816, R818, R820, R822, and R824 are character count highlights and highlights R916, R918, R920, R922, and R924 are decodable indicia type highlights.

One or more program 1800 can be stored on a non-transitory computer readable storage medium, *e.g.,* memory 1082 or 1084. One or more program 1800 can comprise program code logic, *e.g.,* instructions for execution by a processor for performance of a method set forth herein, *e.g.,* as set forth in connection with FIG. 8. The computer readable medium can be *e.g.,* a semiconductor integrated circuit based memory device, a compact disk, floppy disk, thumb drive, a flash memory device, a hard drive. One or more program 1800 can be stored on a computer readable storage medium provided by one or more memory device of a memory of an external CPU-equipped apparatus (*e.g*., a server, an external apparatus configured in the manner of apparatus 1000), and downloaded to apparatus 1000. One or more program 1800 can be stored on a computer readable storage medium provided by one or more memory device of a memory 1085 of apparatus 1000. In one embodiment, one or more program 1800 can be stored on a computer readable storage medium that is physically transportable, *e.g.,* compact disk, floppy disk, thumb drive.

There is set forth herein a computer program product for facilitating selective output of decoded message data, the computer program product comprising: a computer readable storage medium readable by a processing circuit and storing instructions for execution by the processing circuit for performing a method comprising: displaying, using a processor, image data corresponding to a decodable indicia in a field of view of an imaging apparatus, and outputting using the processor decoded message data of a selected decoded indicia responsively to an operator input control to output decoded message data of a selected decodable indicia.

While the present invention has been described with reference to a number of specific embodiments, it will be understood that the scope of the invention should be determined only with respect to claims that can be supported by the present specification. Further, while in numerous cases herein wherein systems and apparatuses and methods are described as having a certain number of elements it will be understood that such systems, apparatuses and methods can be practiced with fewer than or greater than the mentioned certain number of elements. Also, while a number of particular embodiments have been described, it will be understood that features and aspects that have been described with reference to each particular embodiment can be used with each remaining particularly described embodiment.

## Claims

1. An indicia-reading device (100, 1000), comprising:
one or more processors (1060);
a memory (1085);
an imaging subsystem (1040) configured to acquire a succession of frames of decodable indicia (15, 202, 204, 206);
a display (54); and
a communication interface (1604, 1608);
wherein said device is configured, responsive to acquiring a succession of frames of one or more objects within a field of view (140) of said imaging subsystem, to locate and decode within each frame of said succession of frames more than one decodable indicia;
wherein
said device is further configured to display said succession of frames on said display and visually mark, using a visual marking, said more than one successfully decoded decodable indicia within each displayed frame of said succession of frames, wherein said visual marking tracks the location of the image representation of said more than one successfully decoded decodable indicia over said succession of frames;
said device is further configured to display a product image which is different from the visual marking at a location of an associated image representation of one or more of said more than one decodable indicia in the succession of frames, wherein said product image is associated with said one or more of said more than one decodable indicia and said product image tracks the location of said associated image representation of said one or more of said more than one decodable indicia over said succession of frames;
said product image associated with said one or more of said more than one decodable indicia and each of said more than one decodable indicia are displayed at the same time; and
said device is further configured, responsive to accepting user input selecting at least one decodable indicia of said displayed more than one decodable indicia, to output at least one decoded message and/or other data determined when a decodable indicia is decoded and/or data determined by messaging a resource using a decoded message.

2. The indicia-reading device (100, 1000) according to claim 1, further configured to accept user input indicating an order in which decoded messages corresponding to more than one decodable indicia are to be transmitted to an external computer.

3. The indicia-reading device (100, 1000) according to claim 1 or 2, further configured i) to accept user input selecting within said displayed succession of frames at least one decodable indicia which is not marked as successfully decoded, and ii) to decode said at least one decodable indicia.

4. The indicia-reading device (100, 1000) according to any of the preceding claims, further configured, responsive to accepting user input selecting at least one decodable indicia of said displayed more than one decodable indicia, to transmit to an external computer at least one image comprising said at least one decodable indicia.

5. The indicia-reading device (100, 1000) according to any of the preceding claims, wherein said visually marking said more than one successfully decoded decodable indicia within said displayed succession of frames comprises i) highlighting said successfully decoded decodable indicia, ii) rendering a bounding box around said successfully decoded decodable indicia, or iii) rendering a visual marker around a center of said successfully decoded decodable indicia.

6. The indicia-reading device (100, 1000) according to any of the preceding claims, wherein said product image which is displayed at a location of said associated image representation of said one or more of said more than one decodable indicia in said succession of frames is displayed in a semi-transparent form so that said associated image representation of said one or more of said more than one successfully decoded decodable indicia can be viewed through the product image.

7. The indicia-reading device (100, 1000) according to any of the preceding claims, configured, in a given operating mode, to selectively output candidate decoded message data responsively to an operator input control to select for output decoded message data of a certain decodable indicia, optionally comprising continually attempting to decode frames of said succession of frames and outputting decoded message data of a subset of the frames.

8. The indicia-reading device (100, 1000) according to any of the preceding claims, wherein the succession of frames comprises one or more windowed frames, and wherein each windowed frame comprises pixel values corresponding to less than a maximum number of pixels subject to readout.

9. The indicia-reading device (100, 1000) according to any of the preceding claims, wherein the selection of said at least one decodable indicia of said displayed more than one decodable indicia comprises selection of its visual marking and/or product image.

10. The indicia-reading device (100, 1000) according to any of the preceding claims, wherein said device is provided by a smart phone, a tablet computer, or a personal digital assistant.

11. The indicia-reading device (100, 1000) according to any of the preceding claims, wherein said imaging subsystem (1040) comprises:
a two-dimensional image sensor (1032) configured to output an analog signal representative of light reflected by an object located within a field of view of said imaging subsystem (1040);
an amplifier (1036) configured to output an amplified analog signal by amplifying said analog signal; and
an analog-to-digital converter (1037) configured to convert said amplified analog signal into a digital signal representing said acquired frames.

12. A method of reading decodable indicia performed on an indicia-reading device (100, 1000), the method comprising:
responsive to acquiring a succession of frames of one or more objects within a field of view (140) of an imaging subsystem of the indicia-reading device, locating and decoding within each frame of said succession of frames more than one decodable indicia,
displaying said succession of frames on a display of the indicia-reading device and visually marking, using a visual marking, said more than one successfully decoded decodable indicia within each displayed frame of said succession of frames, wherein said visual marking tracks the location of the image representation of said more than one successfully decoded decodable indicia over said succession of frames; and
displaying a product image which is different from the visual marking at a location of an associated image representation of one or more of said more than one decodable indicia in the succession of frames, wherein said product image is associated with said one or more of said more than one decodable indicia and said product image tracks the location of said associated image representation of said one or more of said more than one decodable indicia over said succession of frames, and wherein said product image associated with said one or more of said more than one decodable indicia and each of said more than one decodable indicia are displayed at the same time; and
responsive to accepting user input selecting at least one decodable indicia of said displayed more than one decodable indicia, outputting at least one decoded message and/or other data determined when a decodable indicia is decoded and/or data determined by messaging a resource using a decoded message.

13. One or more computer programs comprising instructions which, when the one or more computer programs are executed by an indicia-reading device (100, 1000), cause the indicia-reading device (100, 1000) to perform the method of claim 12.

14. A computer-readable storage medium having the one or more computer programs of claim 13 stored thereon.

## Patentansprüche

1. Zeichenlesevorrichtung (100, 1000), umfassend:
einen oder mehrere Prozessoren (1060);
einen Speicher (1085);
ein Bildgebungs-Teilsystem (1040), das dafür konfiguriert ist, eine Abfolge von Frames decodierbarer Zeichen (15, 202, 204, 206) zu erfassen;
eine Anzeige (54); und
eine Kommunikationsschnittstelle (1604, 1608);
wobei die Vorrichtung dafür konfiguriert ist, in Reaktion auf das Erfassen einer Abfolge von Frames eines oder mehrerer Objekte innerhalb eines Sichtfeldes (140) des Bildgebungs-Teilsystems innerhalb jedes Frames der Abfolge von Frames mehr als ein decodierbares Zeichen zu lokalisieren und zu decodieren;
wobei die Vorrichtung ferner dafür konfiguriert ist, die Abfolge von Frames auf der Anzeige anzuzeigen und das mehr als eine erfolgreich decodierte decodierbare Zeichen innerhalb jedes angezeigten Frames der Abfolge von Frames unter Verwendung einer visuellen Markierung visuell zu markieren, wobei die visuelle Markierung die Position der Bilddarstellung des mehr als einen erfolgreich decodierten decodierbaren Zeichens über die Abfolge von Frames verfolgt;
wobei die Vorrichtung ferner dafür konfiguriert ist, ein Produktbild, das sich von der visuellen Markierung unterscheidet, an einer Position einer verknüpften Bilddarstellung eines oder mehrerer des mehr als einen decodierbaren Zeichens in der Abfolge von Frames anzuzeigen, wobei das Produktbild mit dem einen oder den mehreren des mehr als einen decodierbaren Zeichens verknüpft ist und das Produktbild die Position der verknüpften Bilddarstellung des einen oder der mehreren des mehr als einen decodierbaren Zeichens über die Abfolge von Frames verfolgt;
wobei das Produktbild, das mit dem einen oder den mehreren des mehr als einen decodierbaren Zeichens verknüpft ist, und jedes des mehr als einen decodierbaren Zeichens gleichzeitig angezeigt werden; und
wobei die Vorrichtung ferner dafür konfiguriert ist, in Reaktion auf das Akzeptieren einer Benutzereingabe, die mindestens ein decodierbares Zeichen des angezeigten mehr als einen decodierbaren Zeichens auswählt, mindestens eine decodierte Nachricht und/oder andere Daten, die bestimmt werden, wenn ein decodierbares Zeichen decodiert wird, und/oder Daten, die durch Senden einer Nachricht an eine Ressource unter Verwendung einer decodierten Nachricht bestimmt werden, auszugeben.

2. Zeichenlesevorrichtung (100, 1000) nach Anspruch 1, das ferner dafür konfiguriert ist, eine Benutzereingabe zu akzeptieren, die eine Reihenfolge angibt, in der decodierte Nachrichten, die mehr als einem decodierbaren Zeichen entsprechen, an einen externen Computer gesendet werden sollen.

3. Zeichenlesevorrichtung (100, 1000) nach Anspruch 1 oder 2, die ferner dafür konfiguriert ist, i) eine Benutzereingabe zu akzeptieren, die innerhalb der angezeigten Abfolge von Frames mindestens ein decodierbares Zeichen auswählt, das nicht als erfolgreich decodiert markiert ist, und ii) das mindestens eine decodierbare Zeichen zu decodieren.

4. Zeichenlesevorrichtung (100, 1000) nach einem der vorangehenden Ansprüche, die ferner dafür konfiguriert ist, in Reaktion auf das Akzeptieren einer Benutzereingabe, die mindestens ein decodierbares Zeichen aus den angezeigten mehr als einem decodierbaren Zeichen auszuwählen, mindestens ein Bild, das das mindestens eine decodierbare Zeichen umfasst, an einen externen Computer zu senden.

5. Zeichenlesevorrichtung (100, 1000) nach einem der vorangehenden Ansprüche, wobei das visuelle Markieren des mehr als einen erfolgreich decodierten decodierbaren Zeichens innerhalb der angezeigten Abfolge von Frames umfasst: i) Hervorheben der erfolgreich decodierten decodierbaren Zeichen, ii) Rendern eines Begrenzungsrahmens um die erfolgreich decodierten decodierbaren Zeichen herum, oder iii) Rendern eines visuellen Markers um einen Mittelpunkt der erfolgreich decodierten decodierbaren Zeichen herum.

6. Zeichenlesevorrichtung (100, 1000) nach einem der vorangehenden Ansprüche, wobei das Produktbild, das an einer Position der verknüpften Bilddarstellung des einen oder der mehreren des mehr als einen decodierbaren Zeichens in der Abfolge von Frames angezeigt wird, in einer halbtransparenten Form angezeigt wird, so dass die verknüpfte Bilddarstellung des einen oder der mehreren des mehr als einen erfolgreich decodierten decodierbaren Zeichens durch das Produktbild hindurch betrachtet werden kann.

7. Zeichenlesevorrichtung (100, 1000) nach einem der vorangehenden Ansprüche, die, in einem gegebenen Betriebsmodus, dafür konfiguriert ist, in Reaktion auf eine Bedienereingabesteuerung, decodierte Nachrichtendaten eines gewissen decodierbaren Zeichens zum Ausgeben auszuwählen, decodierte Kandidaten-Nachrichtendaten selektiv auszugeben, optional umfassend den fortlaufenden Versuch, Frames der Abfolge von Frames zu decodieren und decodierte Nachrichtendaten einer Teilmenge der Frames auszugeben.

8. Zeichenlesevorrichtung (100, 1000) nach einem der vorangehenden Ansprüche, wobei die Abfolge von Frames einen oder mehrere Fenster-Frames umfasst, und wobei jeder Fenster-Frame Pixelwerte umfasst, die weniger als einer maximalen Anzahl von zum Auslesen vorgesehenen Pixeln entsprechen.

9. Zeichenlesevorrichtung (100, 1000) nach einem der vorangehenden Ansprüche, wobei die Auswahl des mindestens einen decodierbaren Zeichens aus den angezeigten mehr als einem decodierbaren Zeichen die Auswahl seiner visuellen Markierung und/oder seines Produktbildes umfasst.

10. Zeichenlesevorrichtung (100, 1000) nach einem der vorangehenden Ansprüche, wobei die Vorrichtung durch ein Smartphone, einen Tablet-Computer oder einen persönlichen digitalen Assistenten bereitgestellt wird.

11. Zeichenlesevorrichtung (100, 1000) nach einem der vorangehenden Ansprüche, wobei das Bildgebungs-Teilsystem (1040) umfasst:
einen zweidimensionalen Bildsensor (1032), der dafür konfiguriert ist, ein analoges Signal auszugeben, das Licht darstellt, das durch ein Objekt reflektiert wird, das sich innerhalb eines Sichtfeldes des Bildgebungs-Teilsystems (1040) befindet;
einen Verstärker (1036), der dafür konfiguriert ist, ein verstärktes analoges Signal auszugeben, indem das analoge Signal verstärkt wird; und
einen Analog-Digital-Wandler (1037), der dafür konfiguriert ist, das verstärkte analoge Signal in ein digitales Signal umzuwandeln, das die erfassten Frames darstellt.

12. Verfahren zum Lesen decodierbarer Zeichen, das in einer Zeichenlesevorrichtung (100, 1000) durchgeführt wird, das Verfahren umfassend:
in Reaktion auf das Erfassen einer Abfolge von Frames eines oder mehrerer Objekte innerhalb eines Sichtfeldes (140) eines Bildgebungs-Teilsystems der Zeichenlesevorrichtung, Lokalisieren und Decodieren, innerhalb jedes Frames der Abfolge von Frames, mehr als eines decodierbaren Zeichens,
Anzeigen der Abfolge von Frames auf einer Anzeige der Zeichenlesevorrichtung und visuelles Markieren des mehr als einen erfolgreich decodierten decodierbaren Zeichens innerhalb jedes angezeigten Frames der Abfolge von Frames unter Verwendung einer visuellen Markierung, wobei die visuelle Markierung die Position der Bilddarstellung des mehr als einen erfolgreich decodierten decodierbaren Zeichens über die Abfolge von Frames verfolgt; und
Anzeigen eines Produktbildes, das sich von der visuellen Markierung unterscheidet, an einer Position einer verknüpften Bilddarstellung eines oder mehrerer des mehr als einen decodierbaren Zeichens in der Abfolge von Frames, wobei das Produktbild mit dem einen oder den mehreren des mehr als einen decodierbaren Zeichens verknüpft ist und das Produktbild die Position der verknüpften Bilddarstellung des einen oder der mehreren des mehr als einen decodierbaren Zeichens über die Abfolge von Frames verfolgt, und wobei das Produktbild, das mit dem einen oder den mehreren des mehr als einen decodierbaren Zeichens verknüpft ist, und jedes des mehr als einen decodierbaren Zeichens gleichzeitig angezeigt werden; und
in Reaktion auf das Akzeptieren einer Benutzereingabe, die mindestens ein decodierbares Zeichen des angezeigten mehr als einen decodierbaren Zeichens auswählt, Ausgeben mindestens einer decodierten Nachricht und/oder anderer Daten, die bestimmt werden, wenn ein decodierbares Zeichen decodiert wird, und/oder von Daten, die durch Senden einer Nachricht an eine Ressource unter Verwendung einer decodierten Nachricht bestimmt werden.

13. Ein oder mehrere Computerprogramme, die Instruktionen umfassen, die, wenn das eine oder die mehreren Computerprogramme durch eine Zeichenlesevorrichtung (100, 1000) ausgeführt werden, die Zeichenlesevorrichtung (100, 1000) veranlassen, das Verfahren nach Anspruch 12 durchzuführen.

14. Computerlesbares Speichermedium, das ein oder mehrere darauf gespeicherte Computerprogramme nach Anspruch 13 aufweist.

## Revendications

1. Dispositif de lecture d'indices (100, 1000), comprenant :
un ou plusieurs processeurs (1060) ;
une mémoire (1085) ;
un sous-système d'imagerie (1040) configuré pour acquérir une succession de trames d'indices décodables (15, 202, 204, 206) ;
un afficheur (54) ; et
une interface de communication (1604, 1608) ;
dans lequel ledit dispositif est configuré, en réponse à l'acquisition d'une succession de trames d'un ou plusieurs objets dans un champ de vision (140) dudit sous-système d'imagerie, pour localiser et décoder dans chaque trame de ladite succession de trames plusieurs indices décodables ;
dans lequel ledit dispositif est en outre configuré pour afficher ladite succession de trames sur ledit afficheur et marquer visuellement, en utilisant un marquage visuel, lesdits plusieurs indices décodables décodés avec succès au sein de chaque trame affichée de ladite succession de trames, dans lequel ledit marquage visuel suit l'emplacement de la représentation d'image desdits plusieurs indices décodables décodés avec succès sur ladite succession de trames ;
ledit dispositif est en outre configuré pour afficher une image de produit qui est différente du marquage visuel au niveau d'un emplacement d'une représentation d'image associée d'un ou plusieurs parmi lesdits plusieurs indices décodables dans la succession de trames, dans lequel ladite image de produit est associée auxdits un ou plusieurs parmi lesdits plusieurs indices décodables et ladite image de produit suit l'emplacement de ladite représentation d'image associée desdits un ou plusieurs parmi lesdits plusieurs indices décodables sur ladite succession de trames ;
ladite image de produit associée auxdits un ou plusieurs parmi lesdits plusieurs indices décodables et chacun desdits plusieurs indices décodables sont affichés en même temps ; et
ledit dispositif est en outre configuré, en réponse à l'acceptation de l'entrée d'utilisateur sélectionnant au moins un indice décodable parmi lesdits plusieurs indices décodables affichés, pour émettre au moins un message décodé et/ou d'autres données déterminées lorsqu'un indice décodable est décodé et/ou des données déterminées par l'envoi d'un message à une ressource en utilisant un message décodé.

2. Dispositif de lecture d'indices (100, 1000) selon la revendication 1, configuré en outre pour accepter une entrée d'utilisateur indiquant un ordre dans lequel des messages décodés correspondant à plusieurs indices décodables doivent être transmis à un ordinateur externe.

3. Dispositif de lecture d'indices (100, 1000) selon la revendication 1 ou 2, configuré en outre i) pour accepter une entrée d'utilisateur sélectionnant dans ladite succession de trames affichée au moins un indice décodable qui n'est pas marqué comme décodé avec succès, et ii) pour décoder ledit au moins un indice décodable.

4. Dispositif de lecture d'indices (100, 1000) selon l'une quelconque des revendications précédentes, configuré en outre, en réponse à l'acceptation de l'entrée d'utilisateur sélectionnant au moins un indice décodable parmi lesdits plusieurs indices décodables affichés, pour transmettre à un ordinateur externe au moins une image comprenant ledit au moins un indice décodable.

5. Dispositif de lecture d'indices (100, 1000) selon l'une quelconque des revendications précédentes, dans lequel ledit marquage visuel desdits plusieurs indices décodables décodés avec succès dans ladite succession de trames affichée comprend i) la mise en évidence desdits indices décodables décodés avec succès, ii) le rendu d'une boîte englobante autour desdits indices décodables décodés avec succès, ou iii) le rendu d'un marqueur visuel autour d'un centre desdits indices décodables décodés avec succès.

6. Dispositif de lecture d'indices (100, 1000) selon l'une quelconque des revendications précédentes, dans lequel ladite image de produit qui est affichée à l'emplacement de ladite représentation d'image associée desdits un ou plusieurs parmi lesdits plusieurs indices décodables dans ladite succession de trames est affichée sous une forme semi-transparente de sorte que ladite représentation d'image associée desdits un ou plusieurs parmi lesdits plusieurs indices décodables décodés avec succès puisse être visualisée à travers l'image de produit.

7. Dispositif de lecture d'indices (100, 1000) selon l'une quelconque des revendications précédentes, configuré, dans un mode de fonctionnement donné, pour émettre sélectivement des données de messages décodés candidates en réponse à une commande d'entrée d'opérateur pour sélectionner des données de messages décodés émises d'un certain indice décodable, comprenant éventuellement une tentative de décodage en continu de trames de ladite succession de trames et l'émission de données de messages décodées d'un sous-ensemble des trames.

8. Dispositif de lecture d'indices (100, 1000) selon l'une quelconque des revendications précédentes, dans lequel la succession de trames comprend une ou plusieurs trames fenêtrées, et dans lequel chaque trame fenêtrée comprend des valeurs de pixels correspondant à moins d'un nombre maximal de pixels soumis à la lecture.

9. Dispositif de lecture d'indices (100, 1000) selon l'une quelconque des revendications précédentes, dans lequel la sélection dudit au moins un indice décodable parmi lesdits plusieurs indices affichés décodables comprend la sélection de son marquage visuel et/ou de son image de produit.

10. Dispositif de lecture d'indices (100, 1000) selon l'une quelconque des revendications précédentes, dans lequel ledit dispositif est fourni par un téléphone intelligent, une tablette ou un assistant numérique personnel.

11. Dispositif de lecture d'indices (100, 1000) selon l'une quelconque des revendications précédentes, dans lequel ledit sous-système d'imagerie (1040) comprend :
un capteur d'image bidimensionnel (1032) configuré pour émettre un signal analogique représentatif d'une lumière réfléchie par un objet localisé dans un champ de vision dudit sous-système d'imagerie (1040) ;
un amplificateur (1036) configuré pour émettre un signal analogique amplifié en amplifiant ledit signal analogique ; et
un convertisseur analogique-numérique (1037) configuré pour convertir ledit signal analogique amplifié en un signal numérique représentant lesdites trames acquises.

12. Procédé de lecture d'indices décodables réalisé sur un dispositif de lecture d'indices (100, 1000), le procédé comprenant :
en réponse à l'acquisition d'une succession de trames d'un ou plusieurs objets dans un champ de vision (140) d'un sous-système d'imagerie du dispositif de lecture d'indices, la localisation et le décodage dans chaque trame de ladite succession de trames de plusieurs indices décodables,
l'affichage de ladite succession de trames sur un afficheur du dispositif de lecture d'indices et d'un marquage visuel, en utilisant un marquage visuel, desdits plusieurs indices décodables décodés avec succès dans chaque trame affichée de ladite succession de trames, dans lequel ledit marquage visuel suit l'emplacement de la représentation d'image desdits plusieurs indices décodables décodés avec succès sur ladite succession de trames ; et
l'affichage d'une image de produit qui est différente du marquage visuel à un emplacement d'une représentation d'image associée d'un ou plusieurs desdits plusieurs indices décodables dans la succession de trames, dans lequel ladite image de produit est associée auxdits un ou plusieurs parmi lesdits plusieurs indices décodables et ladite image de produit suit l'emplacement de ladite représentation d'image associée desdits un ou plusieurs parmi lesdits plusieurs indices décodables sur ladite succession de trames, et dans lequel ladite image de produit associée auxdits un ou plusieurs parmi lesdits plusieurs indices décodables et chacun desdits plusieurs indices décodables sont affichés en même temps ; et
en réponse à l'acceptation d'une entrée d'utilisateur sélectionnant au moins un indice décodable parmi lesdits plusieurs indices décodables affichés, l'émission d'au moins un message décodé et/ou d'autres données déterminées lorsqu'un indice décodable est décodé et/ou de données déterminées par l'envoi d'un message à une ressource en utilisant un message décodé.

13. Programme ou programmes d'ordinateur comprenant des instructions qui, lorsque les un ou plusieurs programmes d'ordinateur sont exécutés par un dispositif de lecture d'indices (100, 1000), amènent le dispositif de lecture d'indices (100, 1000) à réaliser le procédé selon la revendication 12.

14. Support de stockage lisible par ordinateur sur lequel sont stockés les un ou plusieurs programmes d'ordinateur selon la revendication 13.
